# EUROPEAN PATENT APPLICATION

(11) **EP 1 787 857 A2**
(43) Date of publication of application: **23.05.2007**
(21) Application number: 06380304.3
(22) Date of filing: 21.11.2006
(51) Int. Cl.: B60N 2/36

(54) **Locking device for a fold-down rear seat backrest of a vehicle, structure of a fold-down rear seat backrest and locking and unlocking system of a fold-down rear seat backrest**

(30) Priority: 22.11.2005 ES 200502861
(71) Applicant: GRUPO ANTOLIN-INGENIERIA, S.A., 09007 Burgos (ES)
(72) Inventor: Dominguez Rubio, Francisco, 09007 Burgos (ES); Saez Azofra, Fernando, 26004 Logroño (La Rioja) (ES)
(74) Representative: Carpintero Lopez, Francisco

(57) **Abstract**

The locking device for a fold-down rear seat backrest of a vehicle comprises:
a support (1);
an electric motor (2);
a pawl (3);
a trigger (4); and
an arm (5) associated to the electric motor (2) such that the electric motor can move said arm between a first position and a second position to move the pawl (3) from a locking position to a non-locking position.

The invention also relates to a structure of a fold-down rear seat backrest and to a locking and unlocking system of a fold-down rear seat backrest.

## Description

### TECHNICAL FIELD OF THE INVENTION

The present invention is comprised within the field of fold-down rear seat backrests for automotive vehicles.

### BACKGROUND OF THE INVENTION

In some automotive vehicles it is possible for the rear seat backrests to completely fold down towards the seat cushion for the purpose of increasing the trunk load volume. Devices generally referred to as seat locks are used to secure this type of backrests (with a fold-down backrest) to the body to maintain them in their vertical (not folded) position. These mechanisms allow anchoring the backrest in its unfolded position by means of a trigger housed in a bolt fixed to the body of the vehicle.

The actuation of these locks is normally mechanical; examples of such mechanically-operated locks are described, for example, in JP-A-9-188174, JP-A-8-119010 and WO-01-14166.

If the actuation of the lock is manual and mechanical, the actuator (handle, button, lever, etc.) itself is usually located in the upper part of the backrest, for easy access for the user from inside the vehicle.

This type of mechanical actuators involves a series of drawbacks:
- Given that the actuation mechanism is visible in the seat backrest, it is necessary to provide it with a design that is suitable for the style of the vehicle and to further take measures to prevent possible contacts with the passengers in the event of an accident.
- The distance between the anchor of the lock and the upper part of the backrest where the actuator is located has an effect on the design of the backrest and on the design of the lock, causing problems in the mechanical design, which results in complicated assemblies and an increase in the opening stress.
- Furthermore it is necessary to provide a system for locking the lock for the purpose of preventing entrance to the vehicle from the trunk and/or to prevent children from opening the lock, for example; an open lock can cause the load in the trunk to move the backrest in the event of deceleration of the vehicle and enter the vehicle compartment, harming the passengers in the vehicle.
- Sometimes the mechanical stress necessary to open the lock can be excessive, depending on where the lock is anchored to the body.

To solve the drawbacks resulting from the actuation of a seat lock by means of mechanical actuation, the use of an electric-powered lock has been proposed, which allows the lock to be actuated by means of a switch located in a position close to the driver (for example in the front door, in the dashboard, the sun visor or in the console, etc.), such that the driver takes control of releasing the lock of the rear seat backrest. Patent document WO-A-03/010026 proposes a lock of this type.

However, it has been considered that there is a need for alternative structures for this type of locks, for example which have simpler and/or more compact structures.

### DESCRIPTION OF THE INVENTION

A first aspect of the invention relates to a locking device for a fold-down rear seat backrest of a vehicle, the device of which comprises:
a support (for example, a support plate that can form part of a casing of the device);
an electric motor assembled on the support;
a pawl assembled on the support such that the pawl can rotate or pivot between a locking position and a non-locking position;
a trigger assembled on the support such that the trigger can rotate or pivot between a locking position, in which it can retain a bolt associated to a structure associated to the backrest, and a non-locking position, in which it does not retain said bolt, the trigger and pawl being configured such that when the pawl is in its locking position, the trigger cannot pivot from its locking position to its non-locking position.

According to the invention, the device further comprises an arm associated to the electric motor such that the electric motor can move said arm between a first position and a second position, said arm being associated to the pawl such that a movement of the arm from said first position to said second position moves said pawl from its locking position to its non-locking position.

A very simple structure is thus achieved which allows releasing the rear seat backrest, allowing it to fold down simply by means of a brief actuation of the motor, which can be initiated from a position close to the driver's seat, for example, by means of a switch located on the dashboard or somewhere else that can be easily accessible for the driver. Therefore the risk, for example, of passengers (for example, children) in the rear seat manipulating the lock of the fold-down backrest is reduced.

In any case it is also possible to locate the switch or button for actuating the motor of the lock in other positions, for example, in the rear seat backrest itself of the vehicle, i.e. in a position similar to the one the actuation button or lever of a conventional mechanical lock for the backrest would occupy. The arm can be associated to the pawl such that when the arm is in said first position, the pawl can pivot between the non-locking position and the locking position (without movement of the arm occurring). It can thus be achieved that when the arm is in the first position, the pawl can move from its non-locking position to its locking position, for example, in response to a corresponding movement of the trigger, which can be practical for causing the locking by means of inserting the bolt, i.e. mechanically, without needing to actuate the electric motor.

For this purpose, the pawl can have a coupling part which is housed in an elongated guide structure in the arm, such that when the arm is in said first position, the coupling part can move along said guide structure, in correspondence with a pivoting movement of the pawl between the non-locking position and the locking position. The guide structure can comprise a groove, channel or elongated opening in the arm, for example, at one end of the arm.

The first position can be an extended position of the arm, and the second position can be a retracted position of the arm.

The pawl can have a projecting part which is housed in a groove in the support, such that said groove acts as a guide for the pawl in its movement between its locking position and its non-locking position.

The trigger can be joined to the pawl by means of a connection element, such that if the trigger is moved from its non-locking position to its locking position, the trigger drags the pawl, by means of said connection element, from the non-locking position of the pawl to the locking position of the pawl. This can allow that once the backrest has been unlocked and once the arm has returned to its first position (such that it no longer retains the pawl in its non-locking position), the trigger can move to its locking position - for example, due to a mechanical actuation of the bolt on part of the trigger- and drag the pawl to the locking position of the pawl. Once the pawl has reached its locking position, the pawl prevents the trigger from returning to its non-locking position, the trigger thereby retaining the bolt. An electric or electronic unlocking of the seat backrest can thus be combined with a mechanical locking (which will be caused by the actuation of the bolt on the trigger when the backrest goes from the folded position to the non-folded position). The connection element can furthermore be configured to make the trigger move, at least slightly, from its normal locking position to its non-locking position when the pawl moves to its non-locking position. It can thus be prevented that the pawl accidentally returns to its locking position (for example, when the arm of the electric motor returns to its first position), unless the trigger has previously returned to its locking position, for example, by pushing the trigger with the bolt.

The connection element can comprise at least one elastic element, for example, a spring. Evidently a suitable choice of spring can be useful for implementing the functionality of the element described above.

The support can comprise an opening or mouth for receiving the bolt associated to the structure of the backrest in correspondence with the trigger, and the trigger can have a first part intended for retaining the bolt when the trigger is in its locking position, and a second part on which the bolt can act when the trigger is in its non-locking position to move the trigger to its locking position. These first and second parts can form a U-shaped mouth receiving the bolt and in which the bolt is housed when it is retained by the device.

The device can further comprise a sensor configured to generate an output signal which depends on if the pawl is in its locking position or in its non-locking position; this output signal can be useful for activating an indicator in, for example, an area close to the driver of the vehicle, such that the driver can know at all times the status of the pawl and of the device.

The device can comprise a first connector for connecting the electric motor to an electric control system of the motor (for example, to allow the control of the motor and the device from the position of the driver by means of a switch or the like), and a second connector for connecting the sensor to a sensor status indicator.

The device can be housed in a casing which the support may be part of.

The casing can be, for example, made of plastic. The motor can be joined to the support with screws. The trigger and/or the pawl can be made of resistant plastic materials or metal; in the event that the pawl is made of metal, it may be appropriate for it to be coated with a plastic material or the like to reduce the noise level produced by the device. This can also be applicable to the trigger.

Another aspect of the invention relates to a structure of a fold-down rear seat backrest of a vehicle, comprising:
a backrest assembled such that it can fold between a non-folded position and a folded position, the backrest including at least one device according to the description provided above; and
at least one bolt associated to a structure of the vehicle for retaining the backrest in its non-folded position when the trigger is in its locking position, with the bolt retained by the trigger.

Another aspect of the invention relates to a structure of a fold-down rear seat backrest of a vehicle, comprising:
a backrest assembled such that it can fold between a non-folded position and a folded position, the backrest including at least one bolt; and
at least one device according to the description provided above associated to a structure of the vehicle for retaining the backrest in its non-folded position when the trigger is in its locking position, with the bolt retained by the trigger.

Another aspect of the invention relates to a locking and unlocking system for a fold-down rear backrest of a vehicle, comprising a device according to the description provided above, and a switch for actuating the motor of the device; the switch can be located in a position close to the position of the driver of the vehicle, but it can also be located in other positions, for example, in the rear seat backrest itself of the vehicle (for example, in a position similar to the position that an actuation button or lever for a mechanical backrest lock would occupy).

### DESCRIPTION OF THE FIGURES

To complement the description and for the purpose of aiding to better understand the features of the invention according to a preferred practical embodiment thereof a set of figures is attached as an integral part of said description which, with an illustrative and non-limiting character, shows the following:
Figures 1-6 show schematic plan views of a device according to an embodiment of the invention, in different phases of the operation thereof.
Figure 7 shows a schematic perspective view of the device in its casing.
Figure 8 shows a schematic perspective view of a detail of the device.
Figures 9 and 10 show schematic views of structures of a fold-down rear backrest according to two alternative embodiments of the invention.
Figure 11 shows a schematic view of a locking and unlocking system of a fold-down rear backrest of a vehicle according to an embodiment of the invention.

### PREFERRED EMBODIMENT OF THE INVENTION

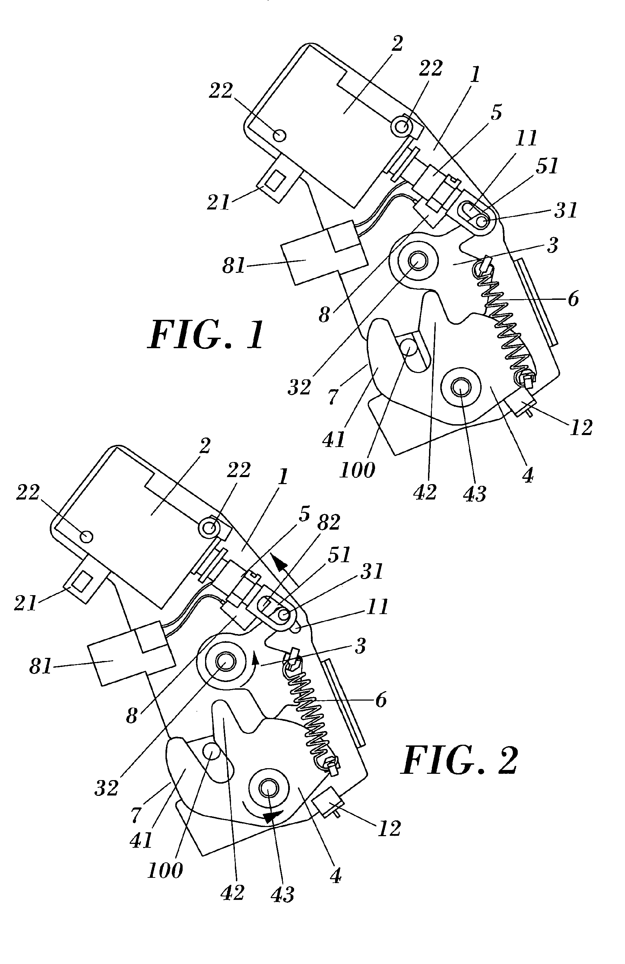

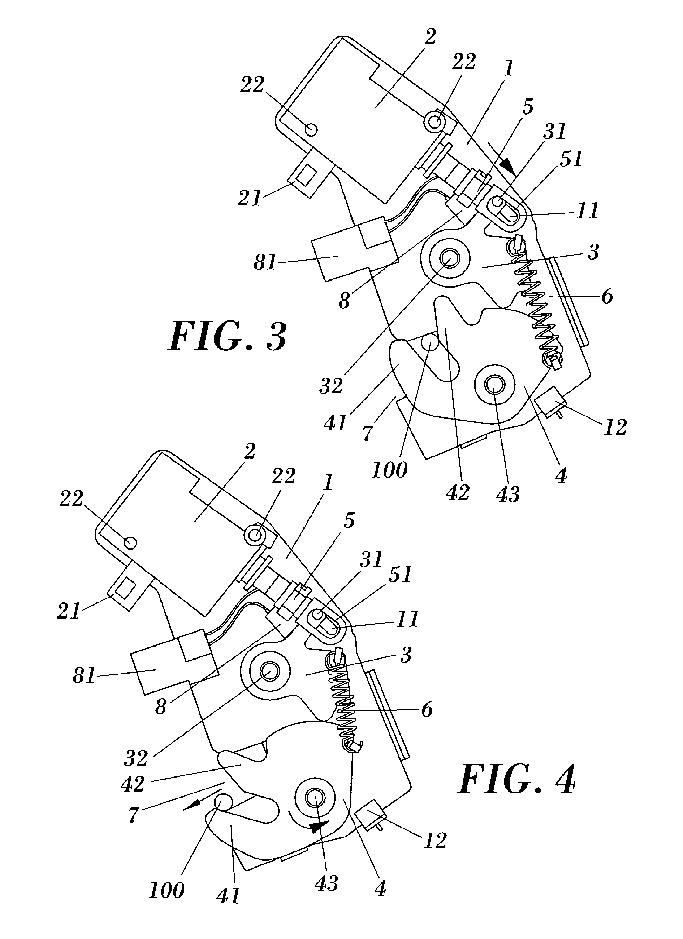

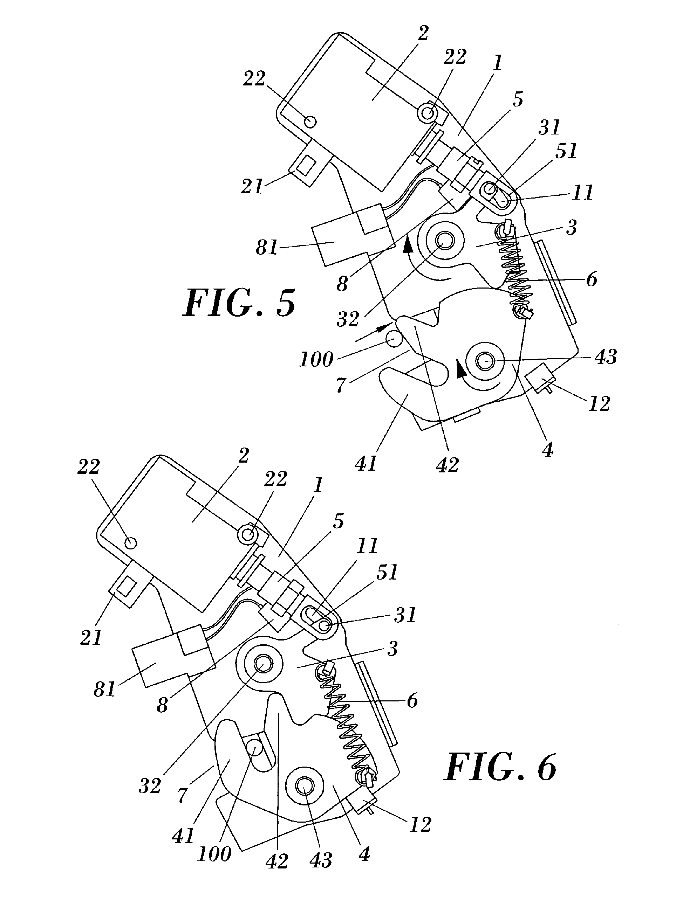

Figure 1 shows a locking device for a fold-down rear seat backrest of a vehicle according to a possible embodiment of the invention, comprising:
a support 1;
an electric motor 2 assembled in the support 1 (in the Figure openings 22 are shown which are useful for coupling the motor in the support by means of screws);
a pawl 3 (which can be of steel or aluminum, coated with plastic) assembled in the support such that the pawl can pivot (about a shaft 32) between a locking position (shown in Figures 1 and 6) and a non-locking position (shown in Figures 2-5);
a trigger 4 (for example, made of plastic coated steel) assembled in the support such that the trigger can pivot (about a shaft 43) between a locking position (shown in Figures 1-3 and 6), in which it can retain a bolt 100, and a non-locking position (shown in Figures 4 and 5), in which it does not retain said bolt 100.

The trigger 4 and the pawl 3 are configured such that when the pawl 3 is in its locking position, the trigger 4 cannot pivot from its locking position to its non-locking position, because it is "locked" by the pawl, as is shown in Figures 1 and 6.

The device further comprises an arm 5 associated to the electric motor 1 such that the electric motor can move said arm between a first position (the extended position shown in Figures 1, 3, 4, 5 and 6) and a second position (the retracted position shown in Figure 2), said arm 5 being associated to the pawl 3 such that a movement of the arm from said first position to said second position moves or drags said pawl 3 from its locking position to its non-locking position. The pawl has a coupling part 31 (specifically a pivot or boss) which is housed in a guide structure 51 formed by an opening, a mounting hole or elongated groove in the arm 5, such that when the arm is in said first position (see Figure 1 or 3-6), the coupling part can move along said guide structure 51, in correspondence with a pivoting movement of the pawl between the non-locking position and the locking position. The pawl 3 further has a projecting part (not shown in the figures) which is housed in a groove 11 in the support, such that said groove 11 is used as a guide and support for the pawl 3 in its movement between its locking position and its non-locking position.

In addition, it can be seen how the trigger 4 is joined to the pawl 3 by means of a spring 6.

In addition, the support comprises an opening or mouth 7 for receiving the bolt in correspondence with the trigger 4, and the trigger 4 has a first part 41 and a second part 42 between which a U-shaped mouth is formed, this being where the bolt 100 in Figure 1 is retained.

On the other hand, the device comprises a sensor 8 configured to generate an output signal which depends on if the pawl 3 is in its locking position or in its non-locking position. The device further comprises a first connector 21 for connecting the electric motor 2 to an electric control system of the motor, and a second connector 81 for connecting the sensor to a sensor status indicator.

The operation of the device is the following:

In Figure 1, the device is seen in its locking position: the bolt 100 is housed in the mouth 7 in the support and casing of the device, and retained in the U-shaped mouth formed between the first part 41 and the second part 42 of the trigger. In addition, the trigger 4 is retained in its locking position by the pawl 3 due to the complementary shapes of both elements. The pawl thus prevents the trigger from pivoting to its non-locking position (in which it would release the bolt) no matter how much the bolt is pulled outwardly. This position corresponds to a non-folded and locked position of the rear backrest. The trigger rests against a prop 12 which can comprise a stop made of a flexible or elastic material, such as plastic or rubber, which is useful for reducing the noise when the trigger returns to its locking position from a non-locking position, for example, pushed by the bolt.

In Figure 2, a non-locking signal has been sent to the electric motor 2 (for example, from the position of the driver of the vehicle), whereby the electric motor has moved the arm 5 from the first position (the extended position) to the second position (the retracted position, which can be seen in Figure 2), as indicated by the arrow. The arm 5 drags the pawl 3, the coupling part 31 of which is housed in the elongated opening 51 of the arm, such that the pawl 3 pivots to its non-locking position, releasing the trigger 4. In fact, through the spring 6, the pawl 3 even tends to drag the trigger 4 to the non-locking position of the trigger, although depending on the force exerted by the bolt in the opposite direction (which can depend on the weight and configuration of the backrest), it is possible that the trigger 4 does not substantially move until the backrest folding movement begins, at which time the bolt 100 exits its position housed in the mouth 7 and, if necessary, rotates the trigger to its non-locking position, as can be seen in Figure 4. In any case, with the suitable choice of the spring and of the sizes of the elements, in the movement of the pawl 3 to its non-locking position, the pawl 3 "pulls" on the trigger 4 (through the spring 6), making it rotate at least slightly (for example, several degrees), such that the pawl 3 cannot return to its "locking position" because it is "locked" by the trigger.

When the pawl 3 moves to its non-locking position, it acts on a contact element 82 of the sensor 8, the sensor thereby generating an output signal indicating that the pawl is in its non-locking position. As can be seen, the coupling part 31 is housed in the part of the opening 51 that is farthest away from the motor, abutting against the corresponding wall of said opening 51. This means that the pawl cannot return to its locking position because it is retained by the arm 5.

In Figure 3, it can be seen how the coupling part 31 is housed in the opposite part of the opening 51, i.e. in the part closest to the motor. This means that the pawl can now pivot to its locking position. This is owing to the fact that the arm 5 has returned to its first position (for example, as a response to the signal generated by the previously mentioned sensor 8), therefore the coupling part 31 of the pawl 3 can slide along the opening 51 (and another projecting part of the pawl, for example, in the form of a pivot opposite to pivot 31, can slide along the opening or channel 11 in the support). Nevertheless, in the position shown in Figure 3, the pawl cannot return to its locking position because it is "locked" by the trigger 4 which, as indicated above, has slightly rotated from its original position shown in Figure 1.

In Figure 4 it can now be seen how the bolt 100 can move the trigger 4 outwardly; this movement occurs when the user moves the backrest to its folded position, causing a relative movement between trigger 4 and bolt.

In Figure 5, it can be seen how once the backrest returns to its non-folded or vertical position, the bolt 100 is inserted in the mouth 7 and comes into contact with part 42 of the trigger 4, making the trigger 4 pivot or rotate to its locking position. When the trigger 4 rotates, the spring 6 connecting it to the pawl 3 also makes the pawl pivot; its coupling part 31 slides along the opening 51 and another projecting part of the pawl slides along the groove 11. The trigger 4 itself, pushed by the bolt 100, thus makes the pawl return to its locking position.

Figure 6 shows the device again in its locking position, preventing the seat from being able to fold down. The bolt 100 is retained by the trigger 4, which is maintained in its locking position due to the pawl 3 which has been dragged to this position by the spring 6. The sensor 8 detects that the pawl is no longer in its non-locking position and emits the corresponding output signal. As can be observed in Figure 5, the coupling part 31 of the pawl is again in contact with the end of the opening 51 which is farthest away from the motor, whereby as soon as the arm 5 moves to its second position (the retracted position) again, the arm will again drag the pawl to its non-locking position.

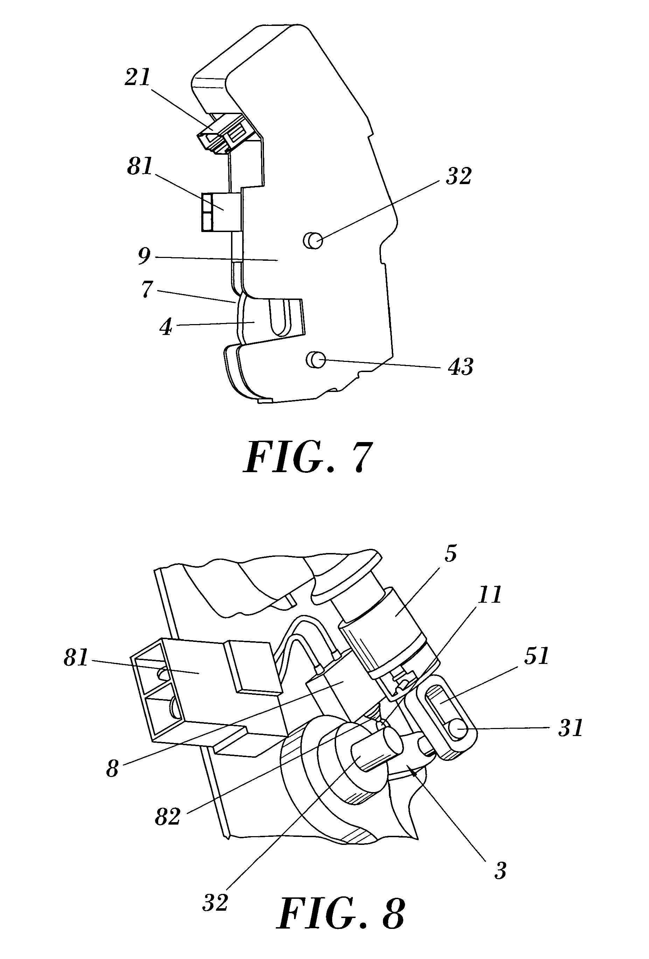

Figure 7 shows a schematic perspective view of the device in its casing 9. As can be seen, it is a compact device which allows its easy incorporation in the structure of a vehicle. The support 1 forms part de the casing 9, which can be made of plastic.

Figure 8 shows how the pawl is assembled such that it can pivot about the shaft 32, and how part of the pawl has the coupling part 31 in the form of a pivot which is placed in the mounting hole, channel or elongated opening 51 of the arm. The contact part 82 of the sensor 8, which will detect the presence of the pawl when it is in its non-locking position, is also seen.

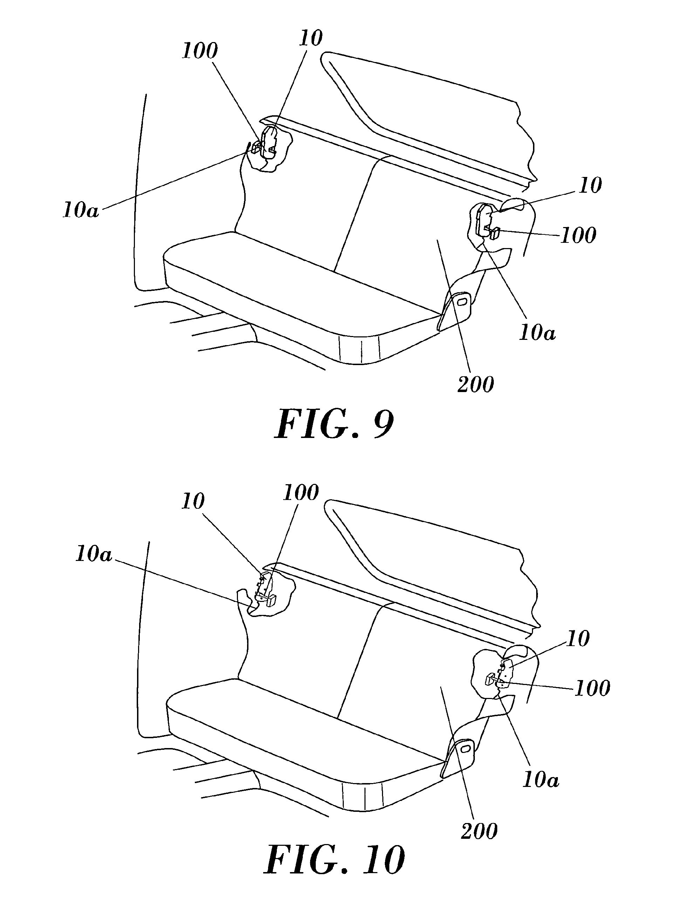

Figure 9 schematically shows a structure of a fold-down rear backrest 200 of a vehicle, with a device 10 according to the description provided above coupled to the backrest and connected by electric cables 10a to a control system (not shown) of the device, and which can comprise a contact associated to the dashboard of the vehicle, for example. It is also shown how the device 10 interacts with a bolt 100 associated to the structure of the vehicle. The device thus allows locking the backrest in the non-folded position, retaining the bolt 100. The backrest can be folded down when the device 10 does not retain the bolt.

Figure 10 shows a similar configuration, but with the bolt associated to the backrest and retained by a device according to the invention, associated to a structure of the vehicle.

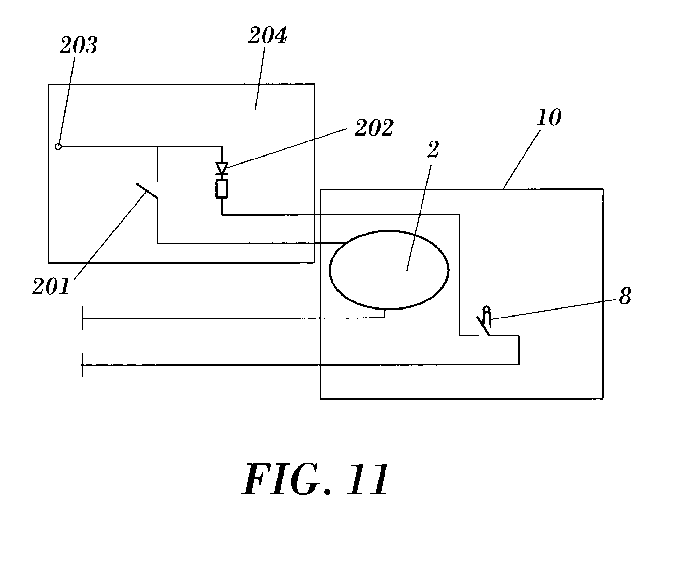

Figure 11 schematically shows a locking and unlocking system of a fold-down rear backrest of a vehicle, comprising a device 10 according to the invention, with a motor 2 and a sensor 8 for detecting when the pawl 3 is in its non-locking position.

Furthermore, as can be seen, the motor is connected between a power source 203 (for example, a 12V battery) and a ground connection through the switch 201, therefore when the switch is closed, it can activate the motor, moving the arm to its second position (the retracted position); when the switch 201 is open, the arm returns to its first position, as discussed in relation to Figures 1-6. A light and/or sound indicator 202, which lights up or is activated when the sensor 8 emits a signal indicating that the pawl is in its non-locking position, has also been provided. Both the switch 201 and the indicator 202 are located in a position 204 close to the position of the driver of the vehicle (for example, in correspondence with the dashboard of the vehicle).

In this text, the word "comprises" and variants thereof (such as "comprising", etc.) should not be interpreted in an exclusive manner, i.e. they do not exclude the possibility that the description may include other elements, steps, etc.

In addition, the invention is not limited to the specific embodiments that have been described, rather it also comprises, for example, variants that can be carried out by a person skilled in the art (for example, as regards the choice of materials, sizes, components, configuration, etc.), within the content of the claims.

## Claims

1. A locking device for a fold-down rear seat backrest of a vehicle, comprising:
a support (1);
an electric motor (2) assembled in the support (1);
a pawl (3) assembled in the support such that the pawl can pivot between a locking position and a non-locking position;
a trigger (4) assembled in the support such that the trigger can pivot between a locking position, in which it can retain a bolt, and a non-locking position, in which it does not retain said bolt, the trigger (4) and the pawl (3) being configured such that when the pawl (3) is in its locking position, the trigger (4) cannot pivot from its locking position to its non-locking position;
**characterized in that**
it further comprises an arm (5) associated to the electric motor (1) such that the electric motor can move said arm between a first position and a second position, said arm (5) being associated to the pawl (3) such that a movement of the arm from said first position to said second position moves said pawl (3) from its locking position to its non-locking position.

2. A device according to claim 1, **characterized in that** the arm (5) is associated to the pawl (3) such that when the arm is in said first position, the pawl can pivot between the non-locking position and the locking position.

3. A device according to claim 2, **characterized in that** the pawl has a coupling part (31) which is housed in an elongated guide structure (51) in the arm (5), such that when the arm is in said first position, the coupling part can move along said guide structure, in correspondence with a pivoting movement of the pawl between the non-locking position and the locking position.

4. A device according to claim 3, **characterized in that** said guide structure (51) comprises an elongated opening in the arm (5).

5. A device according to any of the previous claims, **characterized in that** said first position is an extended position of the arm (5), and **in that** said second position is a retracted position of the arm (5).

6. A device according to any of the previous claims, **characterized in that** the pawl (3) has a projecting part which is housed in a groove (11) in the support, such that said groove (11) is useful as a guide for the pawl (3) in its movement between its locking position and its non-locking position.

7. A device according to any of the previous claims, **characterized in that** the trigger (4) is connected to the pawl (3) by means of a connection element (6), such that if the trigger (4) is moved from its non-locking position to its locking position, the trigger drags the pawl, by means of said connection element (6), from the non-locking position of the pawl (3) to the locking position of the pawl (3).

8. A device according to claim 7, **characterized in that** the connection element (6) comprises at least one elastic element.

9. A device according to claim 8, **characterized in that** said elastic element is a spring.

10. A device according to any of the previous claims, **characterized in that** the support comprises a mouth (7) for receiving the bolt in correspondence with the trigger (4), and **in that** the trigger (4) has a first part (41) intended for retaining the bolt when the trigger is in its locking position, and a second part (42) on which the bolt can act when the trigger is in its non-locking position, to move the trigger to its locking position.

11. A device according to any of the previous claims, **characterized in that** it further comprises a sensor (8) configured to generate an output signal which depends on if the pawl (3) is in its locking position or in its non-locking position.

12. A device according to any of the previous claims, **characterized in that** it comprises a first connector (21) for connecting the electric motor (21) to an electric control system of the motor, and a second connector (81) for connecting the sensor to a sensor status indicator.

13. A device according to any of the claims, **characterized in that** is housed in a casing (9) which the support (1) is part of.

14. A structure of a fold-down rear seat backrest of a vehicle, **characterized in that** it comprises:
a backrest (200) assembled such that it can fold between a non-folded position and a folded position, the backrest including at least one device according to any of the previous claims; and
at least one bolt (100) associated to a structure of the vehicle for retaining the backrest in its non-folded position when the trigger is in its locking position, with the bolt retained by the trigger.

15. A structure of a fold-down rear seat backrest of a vehicle, **characterized in that** it comprises:
a rear seat backrest (200) assembled such that it can fold between a non-folded position and a folded position, the backrest including at least one bolt (100); and
at least one device according to any of claims 1-13, associated to a structure of the vehicle for retaining the backrest in its non-folded position when the trigger is in its locking position, with the bolt retained by the trigger.

16. A locking and unlocking system of a fold-down rear seat backrest of a vehicle, **characterized in that** it comprises at least one device (10) according to any of claims 1-13, and a switch (201) for actuating the motor (2) of the device.

17. A system according to claim 16, **characterized in that** the switch (201) is located in a position (204) close to the position of the driver of the vehicle.

18. A system according to claim 16, **characterized in that** the switch (201) is located in the rear seat backrest.
